# EUROPEAN PATENT APPLICATION

(11) **EP 4 787 340 A1**
(43) Date of publication of application: **05.08.2026**
(21) Application number: 26153870.6
(22) Date of filing: 23.01.2026
(51) Int. Cl.: G06V 20/40, G06V 20/52

(54) **SUMMARISATION OF ANOMALIES IN VIDEO DATA**

(30) Priority: 31.01.2025 GB 202501473
(71) Applicant: Milestone Systems A/S, 2605 Brøndby (DK)
(72) Inventor: NASROLLAHI, Kamal, 2605 Brøndby (DK); MAUSER, Edward Ronald, 2605 Brøndby (DK)
(74) Representative: Canon Europe Limited

(57) **Abstract**

The disclosure provides in a first aspect a computer-implemented method of summarising video anomalies in video data, the method comprising: receiving video data from one or more video surveillance cameras; performing Video Anomaly Detection, VAD, for detecting one or more anomalies in the video data; and summarising the one or more anomalies by generating at least one composite representation that comprises a background on which one or more visual elements are overlaid, wherein the background represents at least a part of a physical area, and the one or more visual elements respectively represent a preview of at least one anomaly at a location in the said physical area where the at least one anomaly was detected.

## Description

### Technical field of the Disclosure

The present disclosure relates to a computer-implemented method of summarising video anomalies in video data, a video processing apparatus, and a computer program for summarising video anomalies in video data. More generally speaking, the present disclosure relates to the field of Video Anomaly Detection (VAD).

### Background of the Disclosure

Surveillance systems are typically arranged to monitor surveillance data received from a plurality of data capture devices. A viewer may be overwhelmed by massive quantities of data captured by a plurality of video surveillance cameras. If the viewer is presented with video data from all the cameras, then the viewer will not know which of the cameras requires the most attention. Conversely, if the viewer is presented with video data from only one of the cameras, then the viewer may miss an event that is observed by another of the cameras.

An assessment needs to be made of how to allocate resources so that that the most important surveillance data is viewed and/or recorded. For video data that is presented live, presenting the most valuable information assists the viewer in deciding actions that need to be taken, at the most appropriate time. For video data that is recorded, storing and retrieving the most important information assists the viewer in understanding events that have previously occurred. Providing an alert to identify valuable information ensures that the viewer is provided with the appropriate context in order to assess whether captured surveillance data requires further attention.

The identification of whether information is important is typically made by the viewer, although the viewer can be assisted by the alert identifying that the information could be important. Typically, the viewer is interested to view video data that depicts the motion of objects that are of particular interest, such as people or vehicles.

VAD, in the field of computer vision (CV), also referred to as abnormal event detection, abnormality detection or outlier detection is the identification of rare events in data. When applied to computer vision this concerns the detection of abnormal behaviour in amongst other things people, crowds and traffic. With the ability to automatically determine if footage is relevant or irrelevant through anomaly detection, this amount of footage could be greatly reduced and could potentially allow for live investigation of the surveillance. This could result in emergency personal receiving notice of a traffic accident before it is called in by bystanders, care takers to know if an elderly person has fallen or police to be aware of an escalating situation requiring their intercession.

For safety and security reasons, automated VAD systems are of particular interest in video surveillance setups, and they generally rely on innovative Deep Learning (DL) solutions and Machine Learning (ML) models.

Going through an entire video, depending on the length of the video, can be time consuming when done manually, or extremely expensive, when done automatically. This also assumes that a perfect video analytics system can process the video with the desired intention. This problem becomes even more challenging if we involve video data coming from various sources.

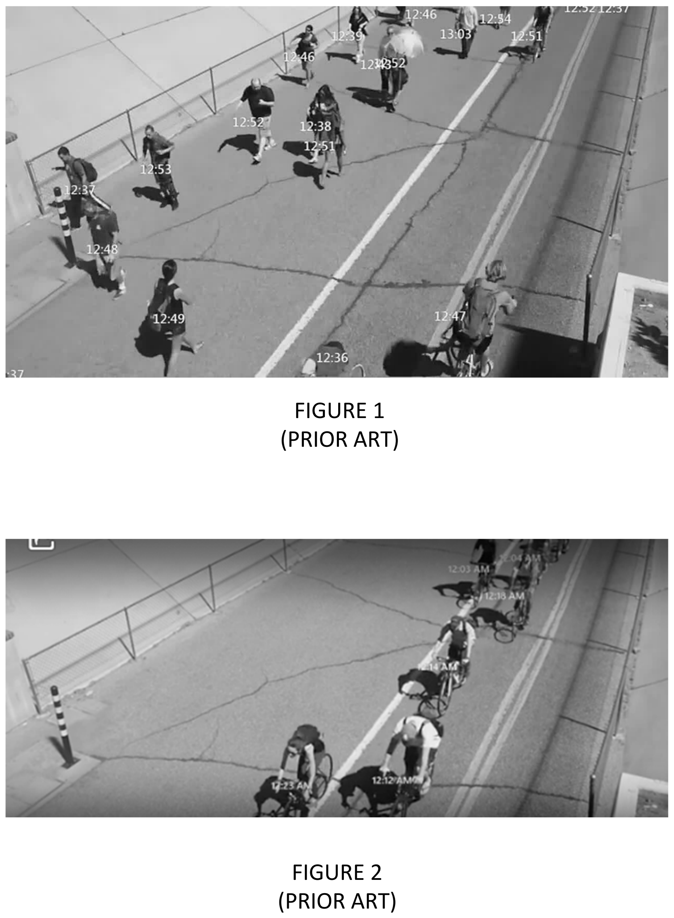

There are various solutions for summarisation of video into key events and/or actors. One of such solutions which is unique in the way the results are presented is BriefCam^{®}'s Video Synopsis^{®}. In the original version, Video Synopsis^{®} was used to reduce a given video to a much shorter version, by superimposing all the detected objects in the original video on a static background with time stamps showing when they appeared in the original video, as shown in Figure 1.

Video Synopsis^{®} was then extended into "Smart Synopsis" combining some pre-defined behaviours and their properties with the previous version of Video Synopsis^{®}. In this updated version, one can ask for example, for a synopsis including bicycles moving in a specific direction, as shown in Figure 2.

However, BriefCam^{®}'s Video Synopsis^{®} in its different implementations aims to display multiple dynamic appearances of a single object across space and time, or multiple dynamic appearances of several selected objects, wherein the said selected objects are selected based on clusters of one or more features which is/are descriptive of the selected source objects. In other words, BriefCam^{®}'s Video Synopsis^{®}, in its current implementations, does not perform VAD.

Thus, there is a general need to develop new apparatuses, systems, methods, computer programs and storage media for performing VAD and summarising any detected anomalies.

### Summary of the Disclosure

The present disclosure addresses at least some of the above-mentioned issues.

Aspects of the present disclosure are set out by the independent claims and preferred features of the disclosure are set out in the dependent claims.

The disclosure provides in a first aspect a computer-implemented method of summarising video anomalies in video data, the method comprising: receiving video data from one or more video surveillance cameras; performing Video Anomaly Detection, VAD, for detecting one or more anomalies in the video data; and summarising the one or more anomalies by generating at least one composite representation that comprises a background on which one or more visual elements are overlaid, wherein the background represents at least a part of a physical area.

Optionally, the VAD computes, for detected objects and/or events in the video data, a respective anomaly score or probability of being anomalous.

Optionally, the one or more visual elements respectively represent a preview of at least one anomaly at a location in the said physical area where the at least one anomaly was detected.

Preferably, the one or more visual elements respectively provide a preview of at least one anomaly that was detected at a location within the said physical area, the preview comprising visual content extracted from the video data corresponding to the time and location at which the at least one anomaly was detected.

Optionally, performing VAD involves performing Open-Set Recognition, OSR, using a Machine Learning, ML, model, trained on video training data including normal behaviours or objects.

Alternatively, performing VAD involves performing Closed-Set Recognition, CSR, using a Machine Learning, ML, model, trained on video training data including both normal and abnormal behaviours or objects.

Optionally, a user chooses a temporal window such as to restrict the video training data to be used for training the ML to video data captured during the said temporal window, and to exclude video data captured outside the said temporal window from being used for training the ML.

Optionally, the user further chooses to restrict the video training data to be used for training the ML to video data including only normal behaviours or objects and/or to exclude video data including abnormal behaviours or objects from the video training data to be used for training the ML.

Optionally, performing VAD involves associating a Machine Learning, ML, model, to each of the one or more video surveillance cameras, wherein each ML model associated to a video surveillance camera corresponds to a context of that video surveillance camera.

Optionally, the said one or more visual elements respectively comprise a timestamp showing a time and/or date at which at least one anomaly was detected.

Optionally, generating a composite representation comprises selecting which anomalies to represent with visual elements depending on a time window within the video data to be summarised.

Optionally, generating a composite representation comprises selecting which anomalies to represent with visual elements depending on a length of the said time window.

Optionally, the method comprises receiving a user instruction to set the said time window.

Optionally, generating a composite representation comprises selecting which anomalies to represent with visual elements depending on a size of the physical area.

Optionally, the method comprises receiving a user instruction to set the size of the physical area.

Optionally, generating a composite representation comprises selecting which anomalies to represent with visual elements depending on probabilities of occurrence of possible anomalies or anomaly scores.

Optionally, the background is that of a scene captured by one of the one or more video surveillance cameras.

Optionally, the background is a static image.

Optionally, the method comprises receiving video data from a plurality of video surveillance cameras and generating a plurality of composite representations, the background in each composite representation corresponding to that of a scene captured by a corresponding video surveillance camera.

Optionally, the method comprises executing a user instruction for selecting the video surveillance cameras for which the composite representations are to be generated.

Optionally, the method comprises executing a user instruction for selecting the video surveillance cameras for which the composite representations are to be generated.

Optionally, the method comprises displaying the plurality of composite representations on a map which represents a surveillance area in which the video surveillance cameras are located.

Optionally, at least one of the one or more visual elements represents a moving image of a detected anomaly.

The disclosure also provides, in a second aspect, a non-transitory computer readable storage medium storing instructions that, when executed, configure a processor to perform a method as specified in any one of the above paragraphs or combination thereof.

The disclosure also provides, in a third aspect, a video processing apparatus, comprising at least one processor configured to: receive video data from one or more video surveillance cameras; perform Video Anomaly Detection, VAD, for detecting one or more anomalies in the video data; and summarise the one or more anomalies by generating at least one composite representation that comprises a background on which one or more visual elements are overlaid, wherein the background represents at least a part of a physical area.

Optionally, the VAD computes, for detected objects and/or events in the video data, a respective anomaly score or probability of being anomalous.

Optionally, the one or more visual elements respectively represent a preview of at least one anomaly at a location in the said physical area where the at least one anomaly was detected.

Preferably, the one or more visual elements respectively provide a preview of at least one anomaly that was detected at a location within the said physical area, the preview comprising visual content extracted from the video data corresponding to the time and location at which the at least one anomaly was detected.

Optionally, to perform VAD involves performing Open-Set Recognition, OSR, using a Machine Learning, ML, model, trained on video data including normal behaviours or objects.

Optionally, to perform VAD involves associating a Machine Learning, ML, model, to each of the one or more video surveillance cameras, wherein each ML model associated to a video surveillance camera corresponds to a context of that video surveillance camera.

Optionally, to generate a composite representation comprises selecting which anomalies to represent with visual elements depending on probabilities of occurrence of possible anomalies or anomaly scores.

Aspects of the present disclosure are set out by the independent claims and preferred features of the disclosure are set out in the dependent claims.

Therefore, summarisation of video data into one or a few frames (such as in a video), focusing on key incidents, or objects is of great interest. This becomes even more interesting/challenging if we involve video data coming from various sources. For example, summarising the video data of a network of cameras, few minutes before an incident until few minutes after the incidents, into few seconds focusing on the key incidents and actors can be of immense value in the security industry, fostering intelligent forensics.

Additional features of the present disclosure will become apparent from the following description of embodiments with reference to the attached drawings.

### Brief description of the drawings

Embodiments of the present disclosure will now be described, by way of example only, with reference to the accompanying drawings in which:
Figures 1 and 2 show two example pictures of BriefCam^{®}'s Video Synopsis^{®}, in its prior art implementations;
Figure 3 shows a video surveillance system in which the present disclosure can be implemented;
Figure 4 is a flowchart illustrating the main steps of a computer-implemented method according to the first aspect of the present disclosure.

### Detailed Description of the Disclosure

Figure 1 shows a picture of BriefCam^{®}'s Video Synopsis^{®} that superimposes objects on a stationary background, simultaneously displaying events that have occurred at various times, with the ability to link back to original video. This implementation of Video Synopsis^{®} allows a viewer or organisation to analyse a scene, and review hours of video in a brief time, by displaying results in the form of a short video clip, or whenever possible as a single image. Such a clip or image allows to condense activity in video by removing idle periods from the video data (where no moving objects appear). The Video Synopsis^{®} tool comprises analytics functions such as real-time alerts, smart alerts, notifications, multi-camera search, face recognition, license plate recognition, appearance similarity, face mask detection, proximity identification, line crossing and display functions such as visual layers, filter tolerance, density and speed control, and sort control.

Figure 2 shows a picture of a more recent implementation of BriefCam^{®}'s Video Synopsis^{®}, as used to highlight cyclists travelling in a south direction of a scene. This version of "Smart Synopsis" leverages DL solutions and CV capabilities to identify specific objects and patterns in the video data. However, "Smart Synopsis" is limited to recognising pre-defined objects and patterns based on training data, and does not perform VAD (i.e. does not detect video anomalies) nor summarises analogous events/behaviours or objects into clips or images, based on the VAD.

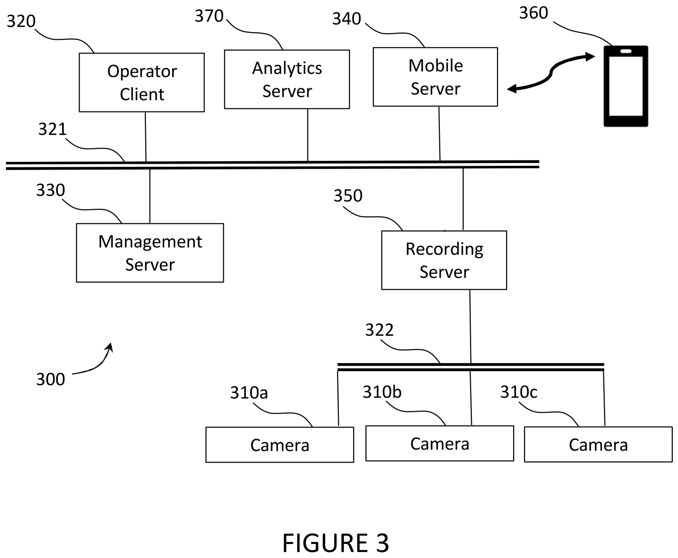

Figure 3 shows an example of a video surveillance system 300 in which embodiments of the disclosure can be implemented. The system 300 comprises a management server 330, a recording server 350, an analytics server 370 and a mobile server 340, which collectively may be referred to as a video management system. Further servers may also be included in the video management system, such as further recording servers or archive servers. A plurality of video surveillance cameras 310a, 310b, 310c send video surveillance data to the recording server 350. An operator client 320 is a fixed terminal which provides an interface via which an operator can view video data live from the cameras 310a, 310b, 310c, and/or recorded video data from the recording server 350.

The cameras 310a, 310b, 310c capture image data and send this to the recording server 350 as a plurality of video data streams.

The recording server 350 stores the video data streams captured by the video cameras 310a, 310b, 310c. Video data is streamed from the recording server 350 to the operator client 320 depending on which live streams or recorded streams are selected by an operator to be viewed.

The mobile server 340 communicates with a user device 360 which is a mobile device such as a smartphone or tablet which has a touch screen display. The user device 360 can access the system from a browser using a web client or a mobile client. Via the user device 360 and the mobile server 340, a user can view recorded video data stored on the recording server 350. The user can also view a live feed via the user device 360.

The analytics server 370 can run analytics software for VAD, but also more generally for image analysis, for example motion or object detection, facial recognition, event detection. The analytics server 370 may generate metadata which is added to the video data, and which describes objects which are identified in the video data.

Other servers may also be present in the system 300. For example, an archiving server (not illustrated) may be provided for archiving older data stored in the recording server 350 which does not need to be immediately accessible from the recording server 350, but which it is not desired to be deleted permanently. A fail-over recording server (not illustrated) may be provided in case a main recording server fails.

The operator client 320, the analytics server 370 and the mobile server 340 are configured to communicate via a first network/bus 321 with the management server 330 and the recording server 350. The recording server 350 communicates with the cameras 310a, 310b, 310c via a second network/bus 322.

The management server 330 includes video management software (VMS) for managing information regarding the configuration of the surveillance/monitoring system 300 such as conditions for alarms, details of attached peripheral devices (hardware), which data streams are recorded in which recording server, etc. The management server 330 also manages user information such as operator permissions. When an operator client 320 is connected to the system, or a user logs in, the management server 330 determines if the user is authorised to view video data. The management server 330 also initiates an initialisation or set-up procedure during which the management server 330 sends configuration data to the operator client 320. The configuration data defines the cameras in the system, and which recording server (if there are multiple recording servers) each camera is connected to. The operator client 320 then stores the configuration data in a cache. The configuration data comprises the information necessary for the operator client 320 to identify cameras and obtain data from cameras and/or recording servers.

Object detection/recognition can be applied to the video data by object detection/recognition software running on the analytics server 370. The object detection/recognition software preferably generates metadata which is associated with the video stream and defines where in a frame an object has been detected. The metadata may also define what type of object has been detected e.g. person, car, dog, bicycle, and/or characteristics of the object (e.g. colour, speed of movement etc). Other types of video analytics software can also generate metadata, such as licence plate recognition, or facial recognition.

Object detection/recognition software, may be run on the analytics server 370, but some cameras can also carry out object detection/recognition and generate metadata, which is included in the stream of video surveillance data sent to the recording server 350. Therefore, metadata from video analytics can be generated in the camera, in the analytics server 370 or both. It is not essential to the present disclosure where the metadata is generated. The metadata may be stored in the recording server 350 with the video data, and transferred to the operator client 320 with or without its associated video data.

The video surveillance system of Figure 3 is an example of a system in which the present disclosure can be implemented. However, other architectures are possible. For example, the system of Figure 3 is an "on premises" system, but the present disclosure can also be implemented at least in part in a cloud-based system. In a cloud-based system, the cameras stream data to the cloud, and at least the recording server 350 is in the cloud. Video analytics may be carried out at the camera, and/or in the cloud. The operator client 320 or mobile client 360 requests the video data to be viewed by the user from the cloud.

A search facility of the operator client 320 may allow a user to look for a specific object or combination of object by searching metadata. Metadata generated by video analytics such as object detection/recognition discussed above can allow a user to search for specific objects or combinations of objects (e.g. white van or man wearing a red baseball cap, or a red car and a bus in the same frame, or a particular license plate or face). The operator client 320 or the mobile client 360 will receive user input of at least one search criterion, and generate a search query.

A search can then be carried out for metadata matching the search query. The search software then sends a request to extract image data from the recording server 350 corresponding to portions of the video data having metadata matching the search query, based on the timestamp of the video data. This extracted image data is then received by the operator client 320 or mobile client 360 and presented to the user at the operator client 320 or mobile client 360 as search results, typically in the form of a plurality of thumbnail images, wherein the user can click on each thumbnail image to view a video clip that includes the object or activity.

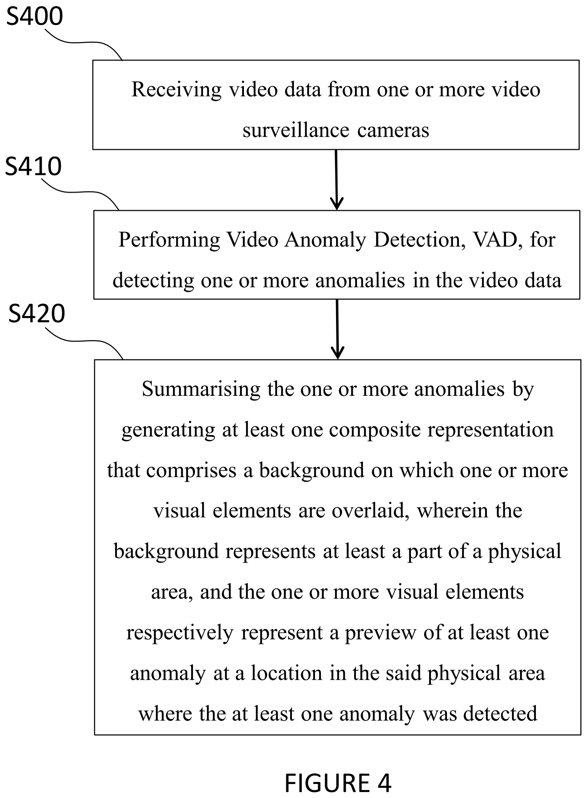

Figure 4 is a flowchart illustrating the steps of the computer-implemented method of summarising video anomalies in video data.

In a step S400, a computer system such as the video surveillance system 300 above receives video data from one or more video surveillance cameras 310a, 310b, 310c, in a conventional way. The received video data is stored in one or more recording servers such as the server 350 described above.

In a step S410, the computer system performs VAD, for detecting one or more anomalies in the video data received from the said video surveillance cameras. VAD may be performed by the analytics server 370, the operator client 320, and/or any other appropriate apparatus or piece of software in the computer system or outside of the computer system. For example, VAD may be performed on a cloud-based system, based for example on video data received from the said recording server 350.

Within the context of the present disclosure, performing VAD means (automatically) identifying abnormal behaviours or objects in the video data, wherein the behaviours or objects are determined to be abnormal or anomalous because they differ from video training data that included behaviours or objects which were labelled as normal, and/or correspond to video training data that included behaviours or objects which were labelled as abnormal or anomalous. Optionally, the video training data may include a combination of normal and abnormal/anomalous behaviours or objects, respectively labelled as normal and abnormal/anomalous behaviours or objects. Relying on video training data that only includes one or the other may provide the benefit that one does not need to use video data training data in which each behaviour and/or object has been individually labelled as being normal or abnormal/anomalous.

According to the disclosure, at least one object or event may be detected and tracked across consecutive frames of video surveillance data according to any known method. Such detecting and tracking may comprise performing multi-object tracking, MOT, for instance using an off-the-shelf multi-class object tracker such as Bot-SORT (Nir Aharon, Roy Orfaig, and Ben-Zion Bobrovsky. Botsort: Robust associations multi-pedestrian tracking. arXiv preprint arXiv:2206.14651, 2022*.).* This tracker allows to perform two crucial CV tasks: object detection together with object re-identification across consecutive frames. This facilitates the subsequent creation of a VAD model comprising spatial and temporal dimensions. The temporal dimension is of particular importance when it comes to addressing the detection of anomalies that are considered due to their deviating visual/spatial appearance, whilst the temporal dimension is used to capture anomalies which are temporal in nature.

Performing MOT may comprise generating and/or outputting bounding boxes representing at least areas in the frames where the said at least one object has been detected.

In the step S410, VAD may be performed using a Probabilistic Graphical Model, PGM, based on the said at least one object that has been detected and tracked. In other words, the PGM is fed, directly or indirectly, with the output of the MOT and the PGM uses conditional probability distributions to identify one or more abnormal events. For example, the PGM is fed with the above-mentioned bounding boxes generated and/or output by the MOT for several consecutive frames and analyses characteristics of the bounding boxes to identify the said one or more abnormal events. Alternatively, and/or additionally, the PGM may analyse characteristics of the respective frames in which the bounding boxes are present and/or characteristics of the object that has been detected and tracked. All these characteristics may be represented by variables, which can be discretised or not for the sake of simplicity or accuracy, respectively. Note that the present disclosure is not limited to a scenario wherein the output of the MOT is sent as is to the PGM. In other words, the disclosure also covers scenarios wherein the output of the MOT is processed (e.g. formatted to a specific format, truncated or the like) before being input into the PGM and/or used by the PGM.

The PGM is computer-readable such that the VAD may be performed in a partial or fully automated way. For example, the PGM comprises a computer-readable Directed Acyclic Graph, DAG. The PGM may further preferably be human-readable, to improve intelligibility of the VAD processing and results.

Preferably, the PGM may model at least a spatial dimension for performing VAD within each of the said consecutive frames and a temporal dimension for performing VAD across the said consecutive frames.

Preferably, to efficiently model the spatial dimension of the model which is responsible of localizing anomalous events within single frames, the consecutive frames may be divided into uniform grid structures of quadratic cells. The size of these cells may depend on the overall resolution of the images in the underlying dataset and may therefore vary across them.

Preferably, the method may comprise determining for each bounding box, which cells intersect with at least a part of that box, for performing VAD. Each bounding box may be considered in full or in part for determining which cells partially or fully intersect with that box.

Preferably, the spatial dimension may be defined by a plurality of variables chosen amongst the group comprising: a frame identifier, a grid cell identifier, an intersection area representing an area of overlap between a bounding box and at least one grid cell, an object class representing a category of the object that has been detected and tracked, a bounding box size, and a bounding aspect ratio corresponding to a bounding box width-to-heigh ratio.

Preferably, the temporal dimension may be defined by the following variables: a velocity of the object that has been detected and tracked, and a movement direction of the object that has been detected and tracked. More preferably, the velocity and/or movement direction are respectively determined based on at least one velocity and at least one movement of a bounding box across consecutive frames.

Preferably, the PGM may model relationships between the said cells and the said variables.

Preferably, the PGM comprises a Discrete Bayesian Network, DBN.

Preferably, the DBN may analyse dependencies between the said variables by means of conditional probability distributions. More preferably, the DBN may analyse dependencies between the said cells and the said variables by means of conditional probability distributions.

Preferably, at least some values of the said variables are determined and discretised to perform VAD using the PGM.

According to the disclosure, performing VAD may involve performing Open-Set Recognition, OSR, using a Machine Learning, ML, model, trained on video training data including normal behaviours or objects. OSR aims to recognise classes of subjects, predicates and/or objects which have not been predefined. In other words, the ML model is advantageously configured to recognise classes of subjects, predicates and/or objects which have not been encountered during training, whilst also properly recognising classes of subjects, predicates and/or objects which have been encountered during training. That is to say, the ML model is preferably configured not to assume that any classes which are encountered post training belong to classes seen during training.

According to another alternative of the disclosure, performing VAD may involve performing Closed-Set Recognition, CSR, using a Machine Learning, ML, model, trained on video training data including both normal and abnormal behaviours or objects. CSR aims to recognise classes of subjects, predicates and/or objects which have been predefined. In other words, the ML model is advantageously configured to recognise classes of subjects, predicates and/or objects which have been encountered during training, whether normal or abnormal. That is to say, the ML model is preferably configured to assume that any classes which are encountered post training belong to classes seen during training.

According to the disclosure, the method allows, or the video processing apparatus is configured to allow a user or operator to choose a temporal window such as to restrict the video training data to be used for training the ML to video data captured during the said temporal window, and to exclude video data captured outside the said temporal window from being used for training the ML. This may for example allow the user or operator to adjust the sensitivity of one or more VAD models used for performing VAD in step 410. This may also, for example, allow the user or operator to adapt the video training data to a desired context. For example, the user or operator may adjust the temporal window to exclude a part of the video training data which is known to contain video anomalies for a given context, but which would not correspond to anomalies for the purpose at hand.

According to the disclosure, the user may further choose to restrict the video training data to be used for training the ML to video data including only normal behaviours or objects and/or to exclude video data including abnormal behaviours or objects from the video training data to be used for training the ML. That is to say, the user or operator specifies that the temporal window of video training data only includes normal objects or events.

In a step S420, the computer system summarises the one or more anomalies by generating at least one composite representation that comprises a background on which one or more visual elements are overlaid, wherein the background represents at least a part of a physical area, and the one or more visual elements respectively represent a preview of at least one anomaly at a location in the said physical area where the at least one anomaly was detected. This summarisation may be performed by the analytics server 370, the operator client 320, and/or any other appropriate apparatus in the computer system or outside of the computer system.

Within the context of the present disclosure, the at least one composite representation may be a static or moving image (i.e. a video clip). Such a static or moving image may essentially correspond to a representation such as that given in Figure 1 or 2, in a static or animated form.

According to the disclosure, the background may correspond to at least part of an image captured by one of the one or more video surveillance cameras (e.g. at least part of the field of view of that camera), for example at a time where no anomalies were detected for the corresponding video surveillance camera(s). The background may thus correspond to a scene of a video camera, and may be static or animated (dynamic), for example, including swaying trees or changing lighting conditions (e.g. depicting nightfall). However, the background may also be dynamic because one or more video cameras from which it originates moved at the time of recording (for example, according to PTZ movements or even external factors such as wind). The background may also be a composite background showing a plurality of scenes captured or corresponding to different video surveillance cameras, for example, in a building, a 3D representation or map of an entire floor with multiple rooms monitored by a plurality of video surveillance cameras.

Alternatively, according to the disclosure, one or more composite representations may be displayed on a map which represents a physical area (surveillance area) in which the video surveillance cameras are located. This may allow a user or operator to grasp the location of the anomalies in a large physical area, whilst also showing where the anomalies occurred in the fields of view of the relevant video cameras associated with these anomalies.

According to the disclosure, a plurality of VAD models may be used, each associated with one or more video surveillance cameras. For example, if the background shows a plurality of scenes captured or corresponding to different video surveillance cameras, one or more composite representations may advantageously be generated using the said plurality of VAD models. Such VAD models may run independently or follow a cascade approach where one model is used after another one, for example using existing VAD results. Such a cascade approach may be predetermined and/or triggered by one or more of the VAD models.

The VAD models may be configured to detect video anomalies such as traffic offenses, road accidents, meteorological conditions (snowing, raining, etc.).

Within the context of the present disclosure, it is to be understood that video anomalies depend on context and what may seem normal in one place may be considered abnormal in another place, and/or what may seem normal at a certain time may be abnormal at another time. Thus, the video training data for VAD should be chosen depending on the context of the physical area to be put under video surveillance.

According to the disclosure, the method allows, or the video processing apparatus is configured to allow a user or operator to associate a VAD model to each of the one or more video surveillance cameras, wherein each VAD model associated to a video surveillance camera corresponds to a context of that video surveillance camera. This allows the user or operator to tailor the method or apparatus to different contexts in the physical area.

According to the disclosure, each VAD model may be a Machine Learning, ML, model. Alternatively, one or more VAD models may be user-defined, rule-based models.

According to the disclosure, an object or event with a low probably will be characterised as a video anomaly, and the lower the probability, the higher the certainty that there is indeed an anomaly (in other words, a lower probability is more informative from a video anomaly perspective).

However, according to the disclosure, a strategy based on one or more thresholds may also be used. For example, an object or event of interest will be characterised as a video anomaly when one or more features of the object or event reach or exceed one or more predetermined thresholds, or one or more thresholds arising out of the video training data.

Alternatively, according to the method or apparatus of the disclosure, performing VAD may involve giving each object and/or event an anomaly score, corresponding to a probability of being anomalous. The scoring may advantageously be done continuously.

The probability of being anomalous may alternatively, or additionally, be represented as feature quantities or vectors. In such cases, it becomes possible to perform more complex operations. For example, the features quantities may be represented in a feature space, and the vectors in a vector space, and the method may select, or the video processing apparatus may select which anomalies to represent based on distances between the anomalies in the feature and/or vector spaces. That is, feature quantities or vectors that are further away from those associated with other objects and/or events may represent more significant or truly relevant anomalies.

According to the disclosure, the method allows, or the video processing apparatus is configured to allow a user or operator to zoom in and out to display the composite representation in full or in part, or several composite representations. That is, the user or operator is allowed to choose to display a composite representation corresponding to at least one video surveillance camera.

According to the disclosure, the user may also be allowed to issue an instruction for selecting the video surveillance cameras for which the composite representations are to be generated. For example, the user may choose all video surveillance cameras corresponding to the full physical area. Alternatively, the user may also be allowed to display one or more composite representations corresponding to only those parts of the physical area or video surveillance cameras for which video anomalies have been detected.

According to the disclosure, the method selects, or the video processing apparatus is configured to select which anomalies to represent with visual elements depending on a size of the physical area. For example, for a large physical area, it may be more informative to only represent the most significant anomalies in that area, e.g. by ranking the anomalies based on probabilities, thresholds or scores and displaying a limited number of anomalies which rank high. Preferably, the method receives, or the video processing apparatus is configured to receive a user instruction to set the size of the physical area. That is, the size to be used by the computer system for summarising the anomalies (which may be different from the actual size of the area).

According to the disclosure, summarising a plurality of anomalies on a plurality of composite backgrounds showing a plurality of scenes captured or corresponding to different video surveillance cameras may allow an operator or user to grasp a trajectory of a tracked object or event of interest in the physical area. Advantageously, trajectories identified in such a way may be used to assess the need to reposition or relocate video surveillance areas in the physical area and/or decide where to add additional video surveillance cameras.

According to the disclosure, summarising the plurality of anomalies may comprise displaying the said anomalies in turn (for example, by keeping temporal order or by displaying them in order of importance depending on likelihood or importance), or by overlapping them when there is a temporal overlap (i.e. when they arose at the same time), or without maintaining a temporal order.

According to the disclosure, each overlaid visual element may be static or animated (dynamic). For example, the visual element may correspond to a looped image showing an abrupt change (showing one or more frames before the anomaly and one or more frames after the anomaly). This may be achieved by any known methods and use any appropriate formats (e.g. Graphics Interchange Format or GIF). Each visual element may also correspond to a cut-out or silhouette of an object and/or event of interest.

According to the disclosure, each overlaid visual element may comprise a timestamp showing a time and/or date at which at least one anomaly was detected. This allows the user or operator to understand when the anomalies happened, which may be particularly important when the video data to be summarised spans periods such as multiple hours, days, months or years.

According to the disclosure, the method selects, or the video processing apparatus is configured to select which anomalies to represent with visual elements depending on a time window within the video data to be summarised. Thus, the method or apparatus may only display anomalies which occurred during a specified time window. Preferably, the time window is chosen by a user or operator.

According to the disclosure, the method selects, or the video processing apparatus is configured to select which anomalies to represent with visual elements depending on a length of the said time window. For example, if the user or operator choses a very long period, it may be more informative to narrow down results to the most significant anomalies during that long period, e.g. by ranking the anomalies based on probabilities, thresholds or scores and displaying a limited number of anomalies which rank high.

Alternatively, according to the disclosure, the method may select, or the video processing apparatus may be configured to select which anomalies to represent with visual elements depending on a length of a time window allocated for displaying the anomalies. For example, assuming a short time window is allocated for displaying the anomalies in animated form (i.e. as video or dynamic images), the method or apparatus may limit the number of anomalies to be represented depending on the length of that time window, e.g. by ranking the anomalies based on probabilities, thresholds or scores and displaying a limited number of anomalies which rank high. Preferably, the time window allocated for displaying the anomalies is chosen by a user or operator.

Thus, the method or apparatus may only display anomalies which occurred during a specified time window and/or in one or more specified parts, or all the physical area (all chosen by a user or operator).

As it can be understood, the present disclosure distinguishes itself from the known versions of BriefCam^{®}'s Video Synopsis^{®} in a few ways. First, VAD is performed based on video training data, without the user or operator being required to filter out Video Synopsis^{®} results. This removes the burden of manually detecting video anomalies and the risks associated with human operations, such as assuming video anomalies which do not exist, missing existing video anomalies, introducing human bias in the manual filtering process, etc. Second, a summary of one or more video anomalies is generated and a preview of the one or more anomalies is represented. This helps the user or operator to immediately grasp the nature of each video anomaly, as opposed to Video Synopsis^{®} results which would not necessarily be represented where anomalies were detected (for example, a person involved in an anomaly could have been represented at a position that is not that of the anomaly and corresponding to another time of that of the anomaly).

The present disclosure also covers a computer program which, when run on a computer, causes the computer to carry out a method according to any one of the alternatives of the present disclosure. The disclosure also provides a (non-transitory) computer-readable data carrier having stored thereon the said computer program.

The present disclosure further covers a video processing apparatus, comprising at least one processor configured to: receive video data from one or more video surveillance cameras; perform Video Anomaly Detection, VAD, for detecting one or more anomalies in the video data; and summarise the one or more anomalies by generating at least one composite representation that comprises a background on which one or more visual elements are overlaid, wherein the background represents at least a part of a physical area, and the one or more visual elements respectively represent a preview of at least one anomaly at a location in the said physical area where the at least one anomaly was detected.

The video processing apparatus may take the form of the operator client (client apparatus) 320 or the analytics server 370 described above, for example. However, the present disclosure is not limited to these examples.

According to the disclosure, the video processing apparatus may perform performing OSR and/or CSR, as described above.

According to the disclosure, to perform VAD, the video processing apparatus may be configured to associate a Machine Learning, ML, model, to each of the one or more video surveillance cameras, wherein each ML model associated to a video surveillance camera corresponds to a context of that video surveillance camera, as described above.

According to the disclosure, to generate a composite representation, the video processing apparatus may be configured to select which anomalies to represent with visual elements depending on probabilities of occurrence of possible anomalies or anomaly scores, as described above.

While the present disclosure has been described with reference to embodiments, it is to be understood that the disclosure is not limited to the disclosed embodiments. The present disclosure can be implemented in various forms without departing from the principal features of the present disclosure as defined by the claims.

Embodiments of the invention are set out in the following claim-like "clauses", which form part of the description. The claims follow the description and are labelled as such.
Clause 1. A computer-implemented method of summarising video anomalies in video data, the method comprising:
   receiving video data from one or more video surveillance cameras;
   performing Video Anomaly Detection, VAD, for detecting one or more anomalies in the video data; and
   summarising the one or more anomalies by generating at least one composite representation that comprises a background on which one or more visual elements are overlaid, wherein the background represents at least a part of a physical area, and the one or more visual elements respectively represent a preview of at least one anomaly at a location in the said physical area where the at least one anomaly was detected.
Clause 2. The method according to clause 1, wherein performing VAD involves performing Open-Set Recognition, OSR, using a Machine Learning, ML, model, trained on video training data including normal behaviours or objects.
Clause 3. The method according to clause 1, wherein performing VAD involves performing Closed-Set Recognition, CSR, using a Machine Learning, ML, model, trained on video training data including both normal and abnormal behaviours or objects.
Clause 4. The method according to clause 2 or 3, wherein a user chooses a temporal window such as to restrict the video training data to be used for training the ML to video data captured during the said temporal window, and to exclude video data captured outside the said temporal window from being used for training the ML.
Clause 5. The method according to clause 4 in combination with clause 2, wherein the user further chooses to restrict the video training data to be used for training the ML to video data including only normal behaviours or objects and/or to exclude video data including abnormal behaviours or objects from the video training data to be used for training the ML.
Clause 6. The method according to any one of the preceding clauses, wherein performing VAD involves associating a Machine Learning, ML, model, to each of the one or more video surveillance cameras, wherein each ML model associated to a video surveillance camera corresponds to a context of that video surveillance camera.
Clause 7. The method according to any one of the preceding clauses, wherein the said one or more visual elements respectively comprise a timestamp showing a time and/or date at which at least one anomaly was detected.
Clause 8. The method according to any one of the preceding clauses, wherein generating a composite representation comprises selecting which anomalies to represent with visual elements depending on a time window within the video data to be summarised.
Clause 9. The method according to the preceding clause, wherein generating a composite representation comprises selecting which anomalies to represent with visual elements depending on a length of the said time window.
Clause 10. The method according to clause 8 or 9, the method comprising receiving a user instruction to set the said time window.
Clause 11. The method according to any one of the preceding clauses, wherein generating a composite representation comprises selecting which anomalies to represent with visual elements depending on a size of the physical area.
Clause 12. The method according to the preceding clause, the method comprising receiving a user instruction to set the size of the physical area.
Clause 13. The method according to any one of the preceding clauses, wherein generating a composite representation comprises selecting which anomalies to represent with visual elements depending on probabilities of occurrence of possible anomalies or anomaly scores.
Clause 14. The method according to any one of the preceding clauses, wherein the background is that of a scene captured by one of the one or more video surveillance cameras.
Clause 15. The method according to the preceding clause, wherein the background is a static image.
Clause 16. The method according to any one of the preceding clauses, the method comprising receiving video data from a plurality of video surveillance cameras and generating a plurality of composite representations, the background in each composite representation corresponding to that of a scene captured by a corresponding video surveillance camera.
Clause 17. The method according to the preceding clause, the method comprising executing a user instruction for selecting the video surveillance cameras for which the composite representations are to be generated.
Clause 18. The method according to the preceding clause, wherein the user instruction is an instruction to select all video surveillance cameras for which at least one anomaly was respectively detected.
Clause 19. The method according to any one of clauses 16 to 18, the method comprising displaying the plurality of composite representations on a map which represents a surveillance area in which the video surveillance cameras are located.
Clause 20. The method according to any one of the preceding clauses, wherein at least one of the one or more visual elements represents a moving image of a detected anomaly.
Clause 21. A computer program which, when run on a computer, causes the computer to carry out the method according to any one of the preceding clauses.
Clause 22. A video processing apparatus, comprising at least one processor configured to:
   receive video data from one or more video surveillance cameras;
   perform Video Anomaly Detection, VAD, for detecting one or more anomalies in the video data; and
   summarise the one or more anomalies by generating at least one composite representation that comprises a background on which one or more visual elements are overlaid, wherein the background represents at least a part of a physical area, and the one or more visual elements respectively represent a preview of at least one anomaly at a location in the said physical area where the at least one anomaly was detected.
Clause 23. The apparatus according to the preceding clause, wherein to perform VAD involves performing Open-Set Recognition, OSR, using a Machine Learning, ML, model, trained on video data including normal behaviours or objects.
Clause 24. The apparatus according to clause 22 or 23 wherein to perform VAD involves associating a Machine Learning, ML, model, to each of the one or more video surveillance cameras, wherein each ML model associated to a video surveillance camera corresponds to a context of that video surveillance camera.
Clause 25. The apparatus according to any one of clauses 22 to 24, wherein to generate a composite representation comprises selecting which anomalies to represent with visual elements depending on probabilities of occurrence of possible anomalies or anomaly scores.

## Claims

1. A computer-implemented method of summarising video anomalies in video
data, the method comprising:
receiving video data from one or more video surveillance cameras;
performing Video Anomaly Detection, VAD, for detecting one or more anomalies in the video data, wherein the VAD computes, for detected objects and/or events in the video data, a respective anomaly score or probability of being anomalous; and
summarising the one or more anomalies by generating at least one composite representation that comprises a background on which one or more visual elements are overlaid, wherein the background represents at least a part of a physical area, and the one or more visual elements respectively provide a preview of at least one anomaly that was detected at a location within the said physical area, the preview comprising visual content extracted from the video data corresponding to the time and location at which the at least one anomaly was detected.

2. The method according to any one of the preceding claims, wherein performing VAD involves associating a Machine Learning, ML, model, to each of the one or more video surveillance cameras, wherein each ML model associated to a video surveillance camera corresponds to a context of that video surveillance camera.

3. The method according to any one of the preceding claims, wherein the said one or more visual elements respectively comprise a timestamp showing a time and/or date at which at least one anomaly was detected.

4. The method according to any one of the preceding claims, wherein generating a composite representation comprises selecting which anomalies to represent with visual elements depending on a time window within the video data to be summarised.

5. The method according to any one of the preceding claims, wherein generating a composite representation comprises selecting which anomalies to represent with visual elements depending on a size of the physical area.

6. The method according to any one of the preceding claims, wherein generating a composite representation comprises selecting which anomalies to represent with visual elements depending on probabilities of occurrence of possible anomalies or anomaly scores.

7. The method according to any one of the preceding claims, wherein the background is that of a scene captured by one of the one or more video surveillance cameras.

8. The method according to any one of the preceding claims, the method comprising receiving video data from a plurality of video surveillance cameras and generating a plurality of composite representations, the background in each composite representation corresponding to that of a scene captured by a corresponding video surveillance camera.

9. The method according to the preceding claim, the method comprising executing a user instruction for selecting the video surveillance cameras for which the composite representations are to be generated.

10. The method according to any one of the preceding claims, wherein at least one of the one or more visual elements represents a moving image of a detected anomaly.

11. A computer program which, when run on a computer, causes the computer to carry out the method according to any one of the preceding claims.

12. A video processing apparatus, comprising at least one processor configured to:
receive video data from one or more video surveillance cameras;
perform Video Anomaly Detection, VAD, for detecting one or more anomalies in the video data, wherein the VAD computes, for detected objects and/or events in the video data, a respective anomaly score or probability of being anomalous; and
summarise the one or more anomalies by generating at least one composite representation that comprises a background on which one or more visual elements are overlaid, wherein the background represents at least a part of a physical area, and the one or more visual elements respectively provide a preview of at least one anomaly that was detected at a location within the said physical area, the preview comprising visual content extracted from the video data corresponding to the time and location at which the at least one anomaly was detected.

13. The apparatus according to the preceding claim, wherein to perform VAD involves performing Open-Set Recognition, OSR, using a Machine Learning, ML, model, trained on video data including normal behaviours or objects.

14. The apparatus according to claim 12 or 13 wherein to perform VAD involves associating a Machine Learning, ML, model, to each of the one or more video surveillance cameras, wherein each ML model associated to a video surveillance camera corresponds to a context of that video surveillance camera.

15. The apparatus according to any one of claims 12 to 14, wherein to generate a composite representation comprises selecting which anomalies to represent with visual elements depending on probabilities of occurrence of possible anomalies or anomaly scores.
